# EUROPÄISCHE PATENTSCHRIFT

(11) **EP 2 494 325 B1**
(45) Veröffentlichungstag und Bekanntmachung des Hinweises auf die Patenterteilung: **03.12.2014**
(21) Anmeldenummer: 10784965.5
(22) Anmeldetag: 27.10.2010
(51) Int. Cl.: G01K 11/32, G01D 5/353, H01B 7/32

(54) **VERFAHREN ZUR ÜBERWACHUNG EINER VERSORGUNGSLEITUNG**
METHOD FOR MONITORING A SUPPLY LINE
PROCÉDÉ DE SURVEILLANCE D'UNE CONDUITE D'ALIMENTATION

(30) Priorität: 27.10.2009 DE 102009050853; 15.02.2010 DE 102010001932
(43) Veröffentlichungstag der Anmeldung: 05.09.2012
(73) Patentinhaber: Draka Industrial Cable GmbH, 42369 Wuppertal (DE)
(72) Erfinder: FUNKEN, Peter, 50226 Frechen (DE); PETERSEN, Steffen, 42369 Wuppertal (DE); EMDE, Nico, 42369 Wuppertal (DE); AGWUEGBO, Obi, 42369 Wuppertal (DE)
(74) Vertreter: Richter Werdermann Gerbaulet Hofmann
(86) Internationale Anmeldenummer: PCT/EP2010/006543
(87) Internationale Veröffentlichungsnummer: WO 2011/054464

(56) Entgegenhaltungen:
- WO-A1-2008/073033
- DE-U1-202005 020 550

## Beschreibung

Die Erfindung bezieht sich auf ein Verfahren zur Überwachung einer Versorgungsleitung zur Versorgung eines Kranes. Die Erfindung bezieht sich ferner auf eine Verwendung einer Kranleitung für ein solches Verfahren.

### Stand der Technik

Im Bereich von Containerhäfen kommen Kräne, wie Schiffsentlader oder Stapelkräne zum Einsatz. Zur elektrischen Anbindung der Kräne an eine Energieversorgungseinrichtung werden derzeit Leitungsbauarten verwendet, die unter der Produktbezeichnung Tenax TTZ oder Tenax TTZS von der Anmelderin erhältlich sind und deren Leitungslängen üblicherweise zwischen 300 Metern und 500 Metern betragen. Neben den drei zur elektrischen Energieversorgung der Kräne bestimmten Phasenleitern befindet sich zur Übertragung von Steuersignalen zusätzlich ein Lichtwellenleiter (LWL) im Aufbau der Leitung. Um den Lichtwellenleiter vor übermäßigen mechanischen Belastungen zu schützen ist dieser, in einem Röhrchen gebettet, als LWL-Element in den Leitungsaufbau integriert.

Die Containerhafenbetreiber sind stets bemüht, die Löschzeiten der Frachtschiffe möglichst gering zu halten, um so ihre Kosten auf ein Minimum zu reduzieren. Kranausfälle infolge defekter elektrischer Versorgungsleitungen sind daher unbedingt zu vermeiden. Das Ausfallverhalten elektrischer Versorgungsleitungen wird durch zahlreiche Einflussgrößen bestimmt, wobei Ursachen für die Nichtverfügbarkeit in einer Materialermüdung oder einer Beschädigung des Kabels durch äußere Einwirkungen liegen können. Eine weitere mögliche Ausfallursache liegt in einer thermischen Überlastung einzelner Komponenten der Versorgungsleitung etwa in Folge eines zu hohen Stromflusses oder hoher Außentemperaturen.

DE 20 2005 020 550 U1 beschäftigt sich mit dem Belastungsverfahren von Hochspannungsfreileitungen durch faseroptisches Temperaturmonitoring, wobei der Raman-Effekt, Hotspots, hierzu genannt wird.

WO 2008/073033 beschreibt ein Verfahren mit optischen Sensoren das bei Offshore-Leitungen eingesetzt wird, nicht jedoch bei Kranleitungen.

### Darstellung der Erfindung: Aufgabe, Lösung, Vorteile

Die Aufgabe der Erfindung besteht darin, eine Versorgungsleitung und ein entsprechendes Verfahren bereitzustellen, die es ermöglichen, die Zuverlässigkeit und Verfügbarkeit einer Versorgungsverbindung der eingangs genannten Art zu einem entsprechenden Abnehmer im Vergleich zum Stand der Technik zu erhöhen.

Diese Aufgabe wird erfindungsgemäß durch ein Verfahren mit den Merkmalen des Anspruchs 1 gelöst. Weitere vorteilhafte Merkmale beinhalten die Unteransprüche.

Dank der Erfindung können vorliegende Schwachstellen und/oder Defekte in einer solchen Versorgungsleitung während deren Betrieb detektiert und entsprechende Gegenmaßnahmen frühzeitig eingeleitet werden. Somit ermöglicht es die Erfindung Kranbetreibern in einem Containerhafen auf drohende Ausfälle einer Versorgungsleitung frühzeitig zu reagieren, wodurch letztlich Stillstandbedingte Kosten erheblich gesenkt werden können. Ferner schafft die Erfindung die Voraussetzungen für Lebensdauer- oder Verschleißvorhersagen. Die mit Hilfe der optischen Sensoren gewonnenen, den Zustand der Versorgungsleitung betreffende Daten können beispielsweise gemeinsam mit weiteren Daten, wie die Art des Materials, Formen und Materialdicken in einem Verschleißmodell berücksichtigt werden.

Die Verbesserungen gegenüber dem Stand der Technik betreffend die Versorgungsleitung eines Kranes werden erreicht, in dem in die Versorgungsleitung wenigstens ein optischer Sensor integriert ist, über den wenigstens eine einen physikalischen Zustand im Bereich des optischen Sensors repräsentierende Größe ermittelbar ist. Die Verbesserungen gegenüber dem Stand der Technik betreffend das Verfahren werden erreicht, in dem in die Versorgungsleitung wenigstens ein optischer Sensor integriert wird, wobei in den optischen Sensor ein Lichtsignal eingespeist wird, ferner das Lichtsignal in Abhängigkeit eines durch wenigstens eine physikalisch Größe repräsentierten physikalischen Zustandes oder Zustandsänderung verändert wird und schließlich ein Messwert für die physikalische Größe ausgehend von der Änderung des Lichtsignals bestimmt wird. Unter den Begriff "Versorgungsleitung" fallen im Wortlaut dieses Textes nicht nur Energiekabel zur Speisung des Verbrauchers oder Lichtwellenleiter sondern zum Beispiel auch hydraulische oder pneumatische Schlauchleitungen.

Gemäß einer Ausführungsvariante der Erfindung ist der optische Sensor mit wenigstens einer Messfaser realisiert, die unter Ausbildung wenigstens eines Faser-Bragg-Gitter-(FBG)-Sensors mit einem Bragg-Gitter versehen ist. Ein FBG-Sensor kann gegenüber unterschiedlichen Einflussgrößen, wie beispielsweise der Temperatur oder der Dehnung der Versorgungsleitung empfindlich sein. Die FBG-Technologie hat ferner den Vorteil einer nahezu punktförmigen, also lokal sehr präzisen Messung.

Ein weiterer Vorteil von FBG-Sensoren liegt in den geringen Herstellungskosten. Der Einsatz eines anderen optischen Sensors zur unmittelbaren Erfassung der Verformung der Versorgungsleitung ist grundsätzlich ebenfalls möglich. So ist beispielsweise die Verwendung eines optischen Sensors auf Basis eines faseroptischen Fabry-Perot-Interferometers denkbar. Ferner ist es denkbar für die ortsaufgelöste Temperaturmessung einen Sensor zu verwenden, der auf der zeitaufgelösten Messung der Raman-Rückstreuung basiert, die im Falle der Anti-Stokes-Linie von der Temperatur abhängt. Hierbei werden in die Messfaser zeitlich kurze Laserpulse mit hoher Spitzenleistung eingekoppelt und das zeitliche Abklingen der Intensität der rückgestreuten Raman-Photonen gemessen.

Gemäß einer Ausgestaltung der Erfindung ist die Versorgungsleitung in ein Kombinationskabel integriert. Das Kombinationskabel umfasst insbesondere wenigstens eine elektrische Leitung und/oder eine separat zur Messfaser vorgesehene optische Leitung. Unter dem Begriff "Kombinationskabel" ist im Wortlaut dieses Textes jedes Kabel zu verstehen, das unterschiedliche Übertragungsmedien verwendet, wie eben beispielsweise einen Lichtwellenleiter und Kupfer.

Ein Einsatzzweck der Versorgungsleitung kann zum Beispiel darin liegen, einen ortsbeweglichen, beispielsweise schienengebundenen Verbraucher, wie etwa einen Kran mit einer ortsfesten Anschlussstelle zu verbinden. Bei einem solchen Einsatz wird die Versorgungsleitung in Abhängigkeit von der Bewegung des Verbrauchers bezüglich der Anschlussstelle von einer Wickeltrommel auf- oder abgewickelt. Um zu vermeiden, dass sich durch eine schlaff durchhängende Versorgungsleitung Probleme beim Auf- oder Abwickeln ergeben, ist die Versorgungsleitung stets unter Zugspannung zu halten. Damit diese Zugspannung von der empfindlichen Messfaser abgehalten wird, umfasst die Versorgungsleitung gemäß einer Ausführungsvariante der Erfindung ein Zugentlastungselement, das die Messfaser trägt. Das Zugentlastungselement erhöht die mechanische Festigkeit der Versorgungsleitung und bietet zugleich einen mechanischen Schutz der Messfaser, in dem es die Zugbelastungen aufnimmt und ableitet. Die Messfaser kann so bei geringem Herstellungsaufwand der Versorgungsleitung ohne übermäßigen Aufwand vor Beschädigungen geschützt werden.

Bei einer nachlassenden Zugspannung, die auf die Versorgungsleitung wirkt, kann es zu einer Stauchung der Versorgungsleitung kommen. Negative Auswirkungen einer solchen Stauchung auf die Messfaser können abgeschwächt oder vermieden werden, wenn gemäß einer Ausgestaltung der Erfindung die Messfaser wenigstens abschnittsweise um das Zugentlastungselement insbesondere mit einem verhältnismäßig langen Schlag verseilt ist.

Um den Aufbau der Versorgungsleitung möglichst einfach zu halten und damit deren Herstellung aufwandsarm zu gestalten, erstreckt sich bei einer Ausführungsvariante der Erfindung die Messfaser wenigstens abschnittsweise annähernd geradlinig und parallel zum Zugentlastungselement und ist teilumfänglich oder vollumfänglich vom Zugentlastungselement eng umhüllt.

Erfindungsgemäß wird die Versorgungsleitung in mindestens einem Versuch einer Belastung unterzogen. Dabei werden die Antwortsignale der optischen Sensoren auf die Belastung zur Beurteilung der Qualität der Versorgungsleitung ausgewertet. Es kann somit erreicht werden, dass die Versorgungsleitung, nachdem diese durch eine solche Belastungsprüfung etwa im Rahmen einer Endproduktprüfung als akzeptabel beurteilt worden ist, nach der Auslieferung von der Fabrik eine gewisse Güte aufweist.

Erfindungsgemäß werden die Antwortsignale der optischen Sensoren auf die Belastung zur Detektion eines kritischen Ereignisses ausgewertet. Ferner wird ein Zusammenhang zwischen der Anzahl von kritischen Ereignissen, bezogen auf die Belastung während der Benutzung der Versorgungsleitung und der Anzahl von kritischen Ereignissen, bezogen auf die Belastung während des Versuchs ermittelt. Auf der Grundlage des ermittelten Zusammenhangs wird eine Vorhersage über die Zuverlässigkeit der Versorgungsleitung getroffen. Somit wird ein Weg zur systematisch Ermittlung der Zuverlässigkeit der Versorgungsleitung aufgezeigt. Bei den kritischen Ereignissen kann es sich beispielsweise um auftretende Fehler handeln. Es versteht sich, dass verschiedene Fehlerarten auftreten können, wie zum Beispiel ein Drahtbruch eines elektrischen Leiters.

### Kurze Beschreibung der Zeichnungen

Im Nachfolgenden werden Ausführungsbeispiele der Erfindung unter Bezugnahme auf die beigefügten Zeichnungen noch etwas näher beschrieben. Es zeigen:
Fig.1 eine Seitenansicht einer Wickeltrommel mit teilweise abgewickelter, erfindungsgemäßer Versorgungsleitung, in stark schematisierter Prinzipdarstellung mit gesondert dargestellter Messfaser;
Fig. 2 eine schematische Darstellung eines Querschnitts der erfindungsgemäßen Versorgungsleitung;
Fig. 3 den prinzipiellen Aufbau einer ersten Prüfanordnung für eine Belastungsprüfung, erster Art, der erfindungsgemäßen Versorgungsleitung; und
Fig. 4 den Aufbau einer zweiten Prüfanordnung für eine Belastungsprüfung, zweiter Art, der erfindungsgemäßen Versorgungsleitung, in schematischer Darstellung.

### Bevorzugte Ausführungsform der Erfindung

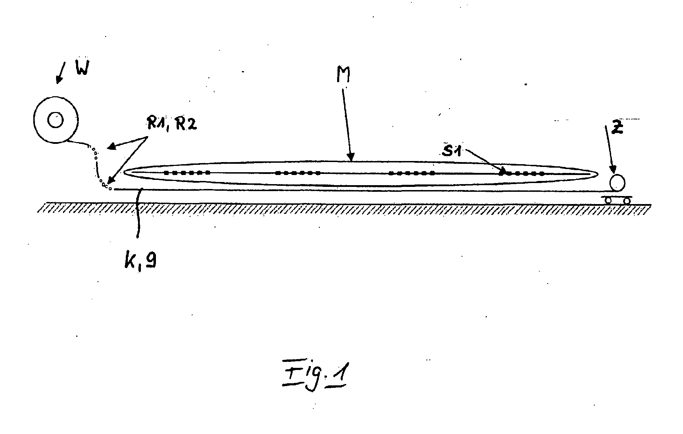

Fig. 1 zeigt zunächst in stark schematisierter Prinzipdarstellung die Seitenansicht einer Wickeltrommel W für eine Versorgungsleitung K, die sich mit einem Abschnitt auf der Wickeltrommel W befindet. Das Kabel verläuft S-förmig über einen Rollengang R1, R2. Die in diesem Falle als Kabel K ausgeführte Versorgungsleitung K dient zur Stromversorgung beispielsweise eines Krans, eines Spreaders oder dergleichen und ist zugleich zur Übertragung von Steuersignalen eingerichtet. Das freie Ende des Kabels K ist mit einer Zugentlastung Z verbunden. Zur Übertragung der Steuersignale ist ein LWL-Element 9 in das Kabel K integriert. Ferner ist in das Kabel K eine separate Messfaser M (die in Fig. 1 gesondert dargestellt ist) integriert, die über ihre gesamte Längserstreckung an mehreren Stellen mit in regelmäßigen vorbestimmten Abständen zueinander angeordneten Faser-Bragg-Gittern S1 (von denen nur einer mit einem Bezugszeichen bezeichnet ist) versehen ist. Die Messfaser ist zusätzlich zum LWL-Element 9 in die Versorgungsleitung integriert.

Die in die Messfaser M eingeschriebenen Faser-Bragg-Gitter S1 bestehen aus Reflexionselementen, in denen sich die Wellenlängen der reflektierten Lichtstrahlung ändern, wenn der Abschnitt der Faseroptik, die diese Reflexionselemente enthält, einer mechanischen oder physikalischen Einwirkung ausgesetzt ist, wie etwa Zug oder einer Änderung der Temperatur. Zur besseren Unterscheidbarkeit haben die einzelnen FBG-Sensoren S1 vorzugsweise jeweils eine voneinander verschiedene Schwerpunktswellenlänge. In jedem FBG-Sensor S1 wird von einem an einer definierten Einspeisestelle eingespeisten Lichtsignal, das etwa von einer (nicht dargestellten) Leuchtdiode stammt, ein durch die jeweilige Schwerpunktswellenlänge bestimmter Anteil zurückreflektiert. Die Schwerpunktswellenlänge ändert sich mit der Verformung eines FBG-Sensors S1 oder der Temperatur im Bereich des betreffenden FBG-Sensors S1. Die Änderungen des Wellenlängenspektrums des jeweiligen zurückreflektierten Teils des Lichtsignals stellen ein Maß für die Verformung (und damit der auf das Kabel K wirkende Kraft) beziehungsweise der Temperatur dar. Es ist aber auch denkbar, den transmittierten Teil des Lichtsignals auf die Veränderung im Wellenlängenspektrum zu untersuchen.

Die so ermöglichte Ermittlung der Erscheinung eines lokalen Wärmeintrags "Hotspots" kann ein Anzeichen dafür sein, dass im betroffenen Bereich einzelne Drähte in einem stromführenden Kupferseil des Kabels K gerissen sind. Die Geschwindigkeit, mit der die Temperaturdifferenz zunimmt und die absolute Temperatur können beispielsweise als Eingangsgröße für eine Lebensdauerprognose herangezogen. Weitere mögliche Eingangsgrößen für die Lebensdauerprognose sind die mit den FBG-Sensoren S1 ermittelte Häufigkeit und Intensität der mechanischen Belastungen sowie die Anzahl von Biegungen und Zugbelastungen.

Das Kabel K wird beim Aufwickeln auf die Wickeltrommel W zu einem spiralförmigen Verlauf gebogen und behält danach solange seine Form bei, wie es sich auf der Wickeltrommel W befindet. Mit anderen Worten bedeutet dies, dass FBG-Sensoren S1, die eine Signaländerung anzeigen sich im "freien" also abgewickelten Abschnitt des Kabels K befinden. Unter der Annahme, dass die Zugkräfte entlang des freien Abschnitts räumlich gleichförmig verteilt sind, sollten mehrere benachbarte FBG-Sensoren S1 gleichförmige Veränderungen bei reiner Zugbeanspruchung anzeigen. Ein über eine vorhandene Rollenbahn gebogene Abschnitt des Kabels K ist im Regelfall sehr viel kleiner, als der Abstand zwischen benachbarten FBG-Sensoren S1. Daraus folgt, dass die durch eine Biegung des Kabels K um die Rollenbahn hervorgerufene Änderung nur von einem FBG-Sensor S1 erfasst wird, sich aber beim benachbarten FBG-Sensor S1 wiederholen sollte. Der zuvor beschriebene Sachverhalt kann im Rahmen einer Plausibilitätsprüfung berücksichtigt werden. Die Position des bezüglich der genannten Einspeisestelle nächstgelegen, sich in einem freien Abschnitt befindlichen FBG-Sensors S1 kann bei einer Erstinbetriebnahme ermittelt werden.

Durch Auswertung der Antwortsignale der einzelnen FBG-Sensoren S1 können die gegenwärtige räumliche Position jedes Abschnitts des Kabels K und zugleich die mechanischen und/oder thermischen Belastungen, denen der betreffende Abschnitt an seiner Position gerade ausgesetzt ist, ermittelt werden. So lässt sich beispielsweise feststellen, welcher Abschnitt sich augenblicklich im Rollengang R1, R2 befindet. Ferner lässt sich durch die Auswertung der Antwortsignale der einzelnen FBG-Sensoren S1 die gegenwärtige Position des zu versorgenden Verbrauchers ermitteln.

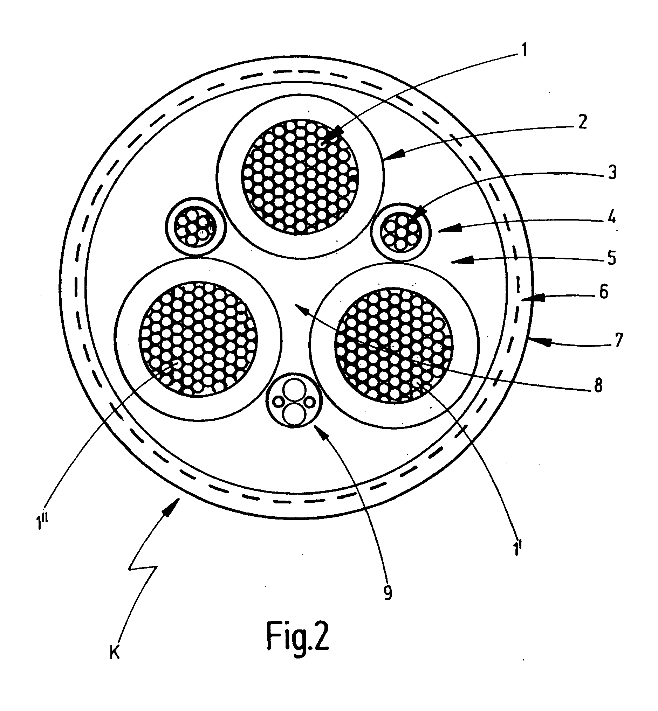

Fig. 2 zeigt. eine schematische Darstellung eines Querschnitts des erfindungsgemäßen Kabels K. Das Kabel K umfasst einen außen liegenden, als Schutzmantel ausgebildeten Außenmantel 7, der mehrere Leitungskomponenten umgibt. Zwischen der Innenschicht und der Außenschicht des Außenmantels 7 befindet sich ein Torsionsschutz 6. Das Kabel K umfasst ferner einen Innenmantel 5.

Als unterschiedliche Typen für Leitungskomponenten verlaufen innerhalb des Außenmantels 7 das LWL-Element 9, mehrere Stromversorgungsleiter 1, 1', 1", bei denen es sich zum Beispiel um Kupferleitungen handelt, sowie ein Schutzleiter 3. Letzterer ist von einer leitfähigen Ummantelung 4 umgeben. Die Stromversorgungsleiter 1, 1', 1" sind jeweils von einer isolierenden Umhüllung 2 umgeben. Das Kabel K umfasst ferner ein die Messfaser M tragendes zentrales Zugentlastungselement 8, das zum Beispiel aus einem Aramidfasern umfassenden hochzugfesten Material hergestellt ist. Beispielsweise ist das Zugentlastungselement 8 aus einem Material hergestellt, das unter dem Handelsnamen Kevlar (eingetragenes Warenzeichen der Firma Dupont) erhältlich ist.

Hinsichtlich der Art der Verlegung der unter Fig. 1 im Einzelnen beschriebenen Messfaser M innerhalb des Kabels K kommen vor allem zwei Varianten in Betracht. Eine erste Variante der Verlegung der Messfaser M eignet sich besonders für den Fall, bei dem eine Reißdehnung der Messfaser M sehr viel mehr als 2% beträgt. Bei dieser ersten Verlegungsvariante wird die Messfaser M längs im Zugentlastungselement 8 integriert. Bei einer zweiten Verlegungsvariante wird die Messfaser M über einen dünnen Kevlarträgerfaden mit relativ langem Schlag verseilt und darüber längsverlaufend weitere Kevlarfäden aufgebracht. Hierüber wiederum kann optional ein Band zur Fixierung vorgesehen sein. Bei beiden zuvor beschriebenen Verlegungsvarianten wird die Messfaser M in das Zugentlastungselement 8 integriert.

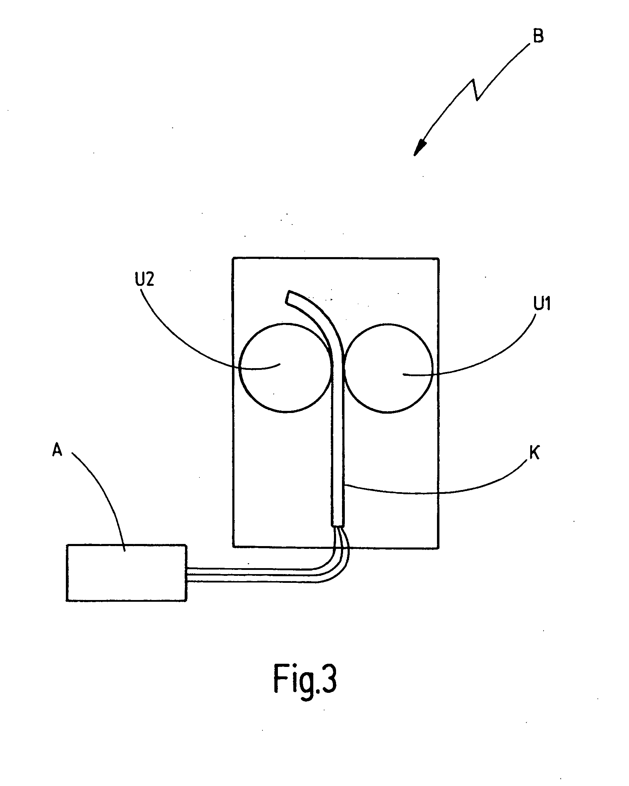

Fig. 3 zeigt den prinzipiellen Aufbau einer ersten Prüfanordnung für eine Belastungsprüfung, erster Art, des zuvor beschriebenen erfindungsgemäßen Kabels K. Die Belastungsprüfung, erster Art, wird beispielsweise zur Beurteilung der Güte des erfindungsgemäß ausgestalteten Kabels K durchgeführt und stellt beispielsweise eine Unterprozedur eines übergeordneten Produktverifikationsvorgangs dar. Bei der Belastungsprüfung, erster Art, wird eine Biegewechseltesteinrichtung B eingesetzt. Um Wechselbiegungen des Kabels K unter Zugbeanspruchung zu simulieren, wird das Kabel K mit einem Ende mittels einer entsprechenden (nicht dargestellten) Klemmvorrichtung klemmend an einem (nicht dargestellten) Schwenkarm fixiert. Am anderen Ende des Kabels K wird eine Gewichtskraft von Gewichten in Gestalt von Belastungsplatten 15 in das Kabel K eingeleitet, um so eine Zugbelastung des Kabels K zu erzeugen. Während der Belastungsprüfung, erster Art, schwenkt der Schwenkarm um 180° von links nach rechts über Umlenkrollen U₁, U₂, die hinsichtlich ihrer Bemessung und/oder Anordnung je nach Typ des geprüften Kabels K. auf dessen jeweiligen Durchmesser abgestimmt bzw. angepasst sind.

Eine (nicht dargestellte) Mess-und Auswerteeinrichtung zur Auswertung der von den FBG-Sensoren S1 gelieferten Messdaten ist über einen Anschluss A an die Biegewechseltesteinrichtung B angeschlossen.

Während der Belastungsprüfung, erster Art, wird das Kabel K zusätzlich elektrisch und messtechnisch betrieben. Mittels einer Strombelastung des Kabels K, die eine Erwärmung der betreffenden Leitung von etwa 50°C zur Folge hat, gibt eine kontinuierliche Messung der Temperatur mittels der FBG- Sensoren S1 Rückschluss darauf, wie sich die Temperatur in Abhängigkeit der mechanischen Belastung des Kabels K ändert. Die Temperaturänderung lässt sich dabei auf Drahtbrüche im betreffenden Leiter zurückführen. Ferner können mittels der von den FBG-Sensoren S1 gelieferten Messdaten Aussagen über die Biegung der Leitung gemacht werden.

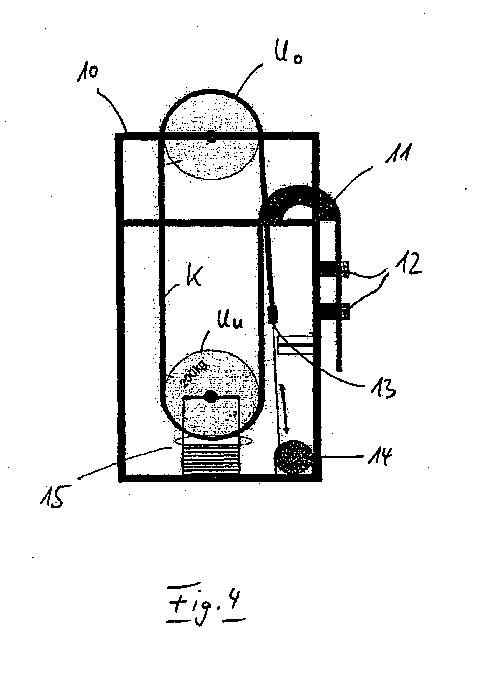

Fig. 4 zeigt in einer schematischen Darstellung den Aufbau einer zweiten Prüfanordnung für eine Belastungsprüfung, zweiter Art, des erfindungsgemäßen Kabels K. Bei der Belastungsprüfung, zweiter Art, wird eine Walkmaschine 10 eingesetzt. Die Walkmaschine 10 umfasst eine untere Umlenkrolle Uᵤ, eine oberhalb der letzteren angeordnete obere Umlenkrolle Uₒ, eine Umlenkung 11, eine Befestigungsvorrichtung 12 und einen Zugklemmbolzen 13.

Die untere Umlenkrolle Uᵤ wird beim Anzug des erfindungsgemäßen Kabels K durch einen Zugmotor 14 angehoben, wodurch das Kabel K durch eine zuvor definierte Gewichtskraft, die durch mehrere Belastungsplatten 15 aufgebracht wird, mechanisch belastet wird. Die in das Kabel K eingeleitete Gewichtskraft kann durch Veränderung der Anzahl bzw. der Masse der einzelnen Belastungsplatten 15 etwa in Abhängigkeit des Typs desgeprüften Kabels K variiert werden. Mit der Walkmaschine 10 lässt sich somit auch eine Überbelastung des Kabels K simulieren.

Die Antwortsignale der FBG-Sensoren S1, die mit der im Kabel K eingelegten Messfaser M realisiert sind, werden einer (nicht dargestellten) Mess-und Auswerteeinheit zugeführt, die aus den Messdaten der FBG-Sensoren S1 die Häufigkeit der Umlenkungen und der Zugkraft erfasst und mittels einer ortsaufgelösten Temperaturmessung das Kabel K auf etwaige Drahtbrüche überwacht.

Auch die Belastungsprüfung, zweiter Art, wird beispielsweise zur Beurteilung der Güte des Kabels K durchgeführt und stellt beispielsweise eine Unterprozedur eines übergeordneten Produktverifikationsvorgangs dar. Die durch die Belastungsprüfung, erster Art, und durch die Belastungsprüfung, zweiter Art, gewonnenen Messdaten können später als Referenzwerte für die Praxis und somit zusätzlich zur Ermittlung oder Bewertung der Lebensdauer des Kabels verwendet werden.

### Bezugszeichen

- 1, 1', 1": Phasenleiter
- 2: isolierende Umhüllung
- 3: Schutzleiter
- 4: leitfähige Ummantelung
- 5: Innenmantel
- 6: Torsionsschutz
- 7: Außenmantel
- 8: Zugentlastungselement
- 9: LWL-(Lichtwellenleiter)-Element
- 10: Walkmaschine
- 11: Umlenkung
- 12: Befestigungsvorrichtung
- 13: Zugklemmbolzen
- 14: Zugmotor
- 15: Belastungsplatten
- A: Anschluss (zur Mess- und Auswerteinrichtung)
- B: Biegewechseltesteinrichtung
- K: Kabel
- M: Messfaser
- R1, R2: Rollengang
- S1: FBG- (Faser-Bragg-Gitter)-Sensor
- U₁, U₂: Umlenkrollen
- Uᵤ: untere Umlenkrolle
- Uₒ,: obere Umlenkrolle
- W: Wickeltrommel

## Patentansprüche

1. Verfahren zur Überwachung einer Versorgungsleitung (K) für die Versorgung eines Kranes, wobei in die Versorgungsleitung (K) wenigstens ein optischer Sensor (S1) integriert wird, wobei in den optischen Sensor (S1) ein Lichtsignal eingespeist wird, wobei das Lichtsignal in Abhängigkeit eines durch wenigstens eine physikalisch Größe repräsentierten physikalischen Zustandes oder Zustandsänderung verändert wird wobei ein Messwert für die physikalische Größe ausgehend von der Änderung des Lichtsignals bestimmt wird, wobei die mit den optischen Sensoren (S1) gewonnenen Informationen zur Erstellung einer Verschleißprognose und/oder einer Prognose der Restlebensdauer der Versorgungsleitung (K) herangezogen werden, wobei die Versorgungsleitung (K) in mindestens einem Versuch einer Belastung unterzogen wird, um Wechselbiegungen der Versorgungsleitung (K) unter Zugbeanspruchung zu simulieren, und die Antwortsignale der optischen Sensoren (S1) auf die Belastung zur Beurteilung der Qualität der Versorgungsleitung (K) ausgewertet werden und wobei die Antwortsignale der optischen Sensoren (S1) auf die Belastung zur Detektion eines kritischen Ereignisses ausgewertet werden, wobei ein Zusammenhang zwischen der Anzahl von kritischen Ereignissen bezogen auf die Belastung während der Benutzung der Versorgungsleitung (K) und der Anzahl von kritischen Ereignissen bezogen auf die Belastung während des Versuchs ermittelt wird und wobei auf der Grundlage des ermittelten Zusammenhangs eine Vorhersage über die Zuverlässigkeit der Versorgungsleitung (K) getroffen wird.

2. Verfahren nach Anspruch 1, **dadurch gekennzeichnet, dass** der optische Sensor (S1) mit wenigstens einer Messfaser (M) realisiert wird, die unter Ausbildung wenigstens eines Faser-Bragg-Gitter-(FBG)-Sensors (S1) mit einem Bragg-Gitter versehen wird.

3. Verfahren nach Anspruch 1 oder 2, **dadurch gekennzeichnet, dass** bei dem Verfahren eine Versorgungsleitung (K) überwacht wird, die in ein Kombinationskabel (K) integriert ist, wobei das Kombinationskabel (K) insbesondere wenigstens eine elektrische Leitung (1, 1', 1") und/oder eine optische Leitung (9) umfasst.

4. Verwendung einer Versorgungsleitung (K), die ein Zugentlastungselement (8) umfasst, das eine Messfaser (M) trägt,
**dadurch gekennzeichnet, dass** die Versorgungsleitung (K) für ein Verfahren nach einem der Ansprüche 1 bis 3 verwendet wird.

5. Verwendung einer Versorgungsleitung (K) nach Anspruch 4 für ein Verfahren nach einem der Ansprüche 1 bis 3, **dadurch gekennzeichnet, dass** die Messfaser (M) wenigstens abschnittsweise um das Zugentlastungselement (8) verseilt ist.

6. Verwendung einer Versorgungsleitung (K) nach Anspruch 4 oder 5 für ein Verfahren nach einem der Ansprüche 1 bis 3, **dadurch gekennzeichnet, dass** sich die Messfaser (M) wenigstens abschnittsweise annähernd geradlinig und parallel zum Zugentlastungselement (8) erstreckt und teilumfänglich oder vollumfänglich vom Zugentlastungselement (8) eng umhüllt ist.

## Claims

1. A method for the monitoring of a power supply line (K) for the supply of power to a crane, wherein at least one optical sensor (S1) is integrated into the power supply line (K), wherein a light signal is fed into the optical sensor (S1), wherein the light signal is altered as a function of a physical state, or state alteration, represented by at least one physical quantity, wherein a measurement value is determined for the physical quantity, originating from the alteration of the light signal, wherein the information obtained with the optical sensors (S1) is used for purposes of creating a wear prognosis and/or a prognosis for the residual life of the power supply line (K), wherein the power supply line (K) is subjected in at least one test to a loading so as to simulate alternating bendings of the power supply line (K) under tensile load, and the signals of the optical sensor (S1) in response to the loading are evaluated for purposes of assessing the quality of the power supply line (K), and wherein the signals of the optical sensor (S1) in response to the loading are evaluated for purposes of detecting a critical event, wherein a relationship is determined between the number of critical events related to the loading during the utilisation of the power supply line (K), and the number of critical events related to the loading during the test, and wherein on the basis of the relationship determined, a prediction is made regarding the reliability of the power supply line (K).

2. The method in accordance with Claim 1, **characterised in that**, the optical sensor (S1) is implemented with at least one measurement fibre (M), which, with the formation of at least one fibre Bragg grating (FBG) sensor (S1), is provided with a Bragg grating.

3. The method in accordance with Claim 1 or 2, **characterised in that**, in the method a power supply line (K) is monitored, which is integrated into a combination cable (K), wherein the combination cable (K) comprises in particular at least one electrical line (1, 1', 1") and/or one optical line (9).

4. A use of a power supply line (K), which comprises a strain relief element (8), which supports a measurement fibre (M), **characterised in that**, the power supply line (K) is used for a method in accordance with one of the Claims 1 to 3.

5. The use of the power supply line (K) in accordance with Claim 4, for a method in accordance with one of the Claims 1 to 3, **characterised in that**, the measurement fibre (M) is stranded at least in sections around the strain relief element (8).

6. The use of a power supply line (K) in accordance with Claim 4 or 5, for a method in accordance with one of the Claims 1 to 3, **characterised in that**, the measurement fibre (M) extends at least in sections approximately linearly and parallel to the strain relief element (8), and is closely encased by the strain relief element (8) over part or all of its periphery.

## Revendications

1. Procédé destiné à la surveillance d'une ligne d'alimentation (K) pour l'alimentation d'une grue, pour lequel au moins un capteur optique (S1) est intégré dans la ligne d'alimentation, pour lequel un signal lumineux est alimenté dans le capteur optique (S1), pour lequel le signal lumineux est modifié en fonction d'un état physique ou d'une modification d'état représenté par au moins une valeur physique, pour lequel une valeur de mesure pour la valeur physique est déterminée en partant de la modification du signal lumineux, pour lequel les informations acquises avec les capteurs optiques (S1) sont consultées pour établir un pronostic d'usure et/ou un pronostic de la durée de vie résiduelle de la ligne d'alimentation (K), pour lequel la ligne d'alimentation (K) est soumise au minimum à un essai d'une charge pour simuler des flexions alternées de la ligne d'alimentation (K) sous un effort de traction et les signaux de réponse des capteurs optiques (S1) à la charge sont exploitées pour évaluer la qualité de la ligne d'alimentation (K) et pour lequel les signaux de réponse des capteurs optiques (S1) à la charge sont exploités pour détecter un évènement critique, pour lequel un rapport entre le nombre des évènements critiques est déterminé en se référant à la charge pendant l'utilisation de la ligne d'alimentation (K) et au nombre des évènements critiques en se référant à la charge pendant l'essai et pour lequel une prévision sur la fiabilité de la ligne d'alimentaiton (K) est formulée sur la base du rapport déterminé.

2. Procédé selon la revendication **1 caractérisé en ce que** le capteur optique (S1) est réalisé avec au moins une fibre de mesure (M) qui est munie d'un réseau de Bragg en créant au moins un capteur à réseau de Bragg de fibre (RBF).

3. Procédé selon la revendication **1** ou **2 caractérisé en ce que** pour le procédé, une ligne d'alimentation (K) est surveillée qui est intégrée dans un câble de combinaison (K), pour lequel le câble de combinaison (K) comprend en particulier au moins un câble électrique (1, 1', 1") et/ou un câble optique.

4. Utilisation d'une ligne d'alimentation (K) qui comprend un élément de décharge de traction (8) qui porte une fibre de mesure (M) pour un procédé selon l'une quelconque des revendications 1 à 3 **caractérisée en ce que** le ligne d'alimentation (K) est utilisée.

5. Utilisation d'une ligne d'alimentation (K) selon la revendication 4 pour un procédé selon l'une quelconque des revendications 1 à 3 **caractérisée en ce que** la fibre de mesure (M) est câblée au moins par sections autour de l'élément de décharge de traction (8).

6. Utilisation d'une ligne d'alimentation (K) selon la revendication 4 ou 5 pour un procédé selon l'une quelconque des revendications 1 à 3 **caractérisée en ce que** la fibre de mesure (M) s'étend au moins par sections de manière presque rectiligne et parallèle à l'élément de décharge de traction (8) et est étroitement enveloppée sur la périphérie en partie ou complètement par l'élément de décharge de traction (8).
